(19) Europäisches Patentamt
European Patent Office
Office européen des brevets

(11) EP 0 668 183 B1

(12) EUROPÄISCHE PATENTSCHRIFT

(45) Veröffentlichungstag und Bekanntmachung des Hinweises auf die Patenterteilung:
27.08.1997 Patentblatt 1997/35

(51) Int. Cl.$^6$: B60K 28/16

(21) Anmeldenummer: 94102667.6

(22) Anmeldetag: 22.02.1994

(54) **Antriebssteuerung für ein Kraftfahrzeug**

Driving control for a vehicle

Contrôle d'entraînement pour une véhicule

(84) Benannte Vertragsstaaten:
DE FR GB

(43) Veröffentlichungstag der Anmeldung:
23.08.1995 Patentblatt 1995/34

(73) Patentinhaber:
SIEMENS AKTIENGESELLSCHAFT
80333 München (DE)

(72) Erfinder: Bauer, Bernhard, Dipl.-Ing. (FH)
D-93057 Regensburg (DE)

(56) Entgegenhaltungen:
EP-A- 0 477 940          EP-A- 0 487 078
EP-A- 0 525 234

**Beschreibung**

Die Erfindung betrifft eine Antriebssteuerung für ein Kraftfahrzeug. Eine solche Antriebssteuerung für ein Kraftfahrzeug schließt u.a. eine Motorsteuerung und eine Antischlupfregelung ein und sie verringert beim Auftreten eines unzulässig großen Schlupfes zwischen mindestens einem Rad und der von dem Kraftfahrzeug befahrenen Fahrbahn das Motordrehmoment.

Bei einer bekannten Schaltungsanordnung zum Regeln des Antriebes eines Kraftfahrzeugs wird von einer Antischlupfsteuerung ein Steuersignal, das ein Maß für den festgestellten Schlupf darstellt, an das Motorsteuergerät übertragen. Liegt das Steuersignal über einem vorgegebenen Wert, so führt die Motorsteuerung eine Antischlupfregelung durch, indem in Abhängigkeit von dem Wert des Steuersignals der Zündwinkel zunehmend nach spät verstellt, danach gegebenenfalls die Spätverstellung wieder zurückgenommen und gleichzeitig zumindest ein Zylinder abgeschaltet und anschließend der Zündwinkel wieder zunehmend wieder nach spät verstellt wird (EP-A-0 525 234).

Bei der bekannten Antriebssteuerung empfängt die Motorsteuerung von der Antischlupfsteuerung ein Signal, das ein Maß für den festgestellten Schlupf darstellt, wertet dieses Signal aus und führt daraufhin eine Antischlupfregelung durch, indem sie das Motordrehmoment verändert.

Der Erfindung liegt die Aufgabe zugrunde, eine Antriebssteuerung zu schaffen, bei der ein Radschlupf ausschließlich von der Antischlupfsteuerung erkannt und ausgewertet wird und von dieser daraufhin an das Motorsteuergerät ein Eingriffssignal übermittelt wird, das den Anteil, um den das Motordrehmoment zu verringern ist, festlegt. Die Motorsteuerung führt diese Drehmomentverringerung dann lediglich aus.

Diese Aufgabe wird erfindungsgemäß durch eine Antriebssteuerung nach Anspruch 1 gelöst.

Die Unteransprüche sind auf zweckmäßige Weiterbildungen der Erfindung gerichtet.

Die Vorteile der Erfindung liegen insbesondere darin, daß das Motordrehmoment zum Zwecke der Antischlupfregelung mit geringem Aufwand verringert und die Motorsteuerung dabei nicht zusätzlich belastet wird. Trotzdem erfolgt die Drehmomentverringerung sehr feinstufig.

Ein Ausführungsbeispiel der Erfindung wird im folgenden anhand der Zeichnung erläutert: Es zeigen:

Figur 1      eine schematische Darstellung einer erfindungsgemäßen Antriebssteuerung,

Figur 2      ein Zylinderausblendmuster für eine Antriebssteuerung nach Figur 1 und

Figur 3      eine Drehmomentreduzierung durch Zündwinkelverstellung bei der Antriebssteuerung nach Figur 1, als Diagramm über der Anzahl aktiver Zylinder aufgetragen.

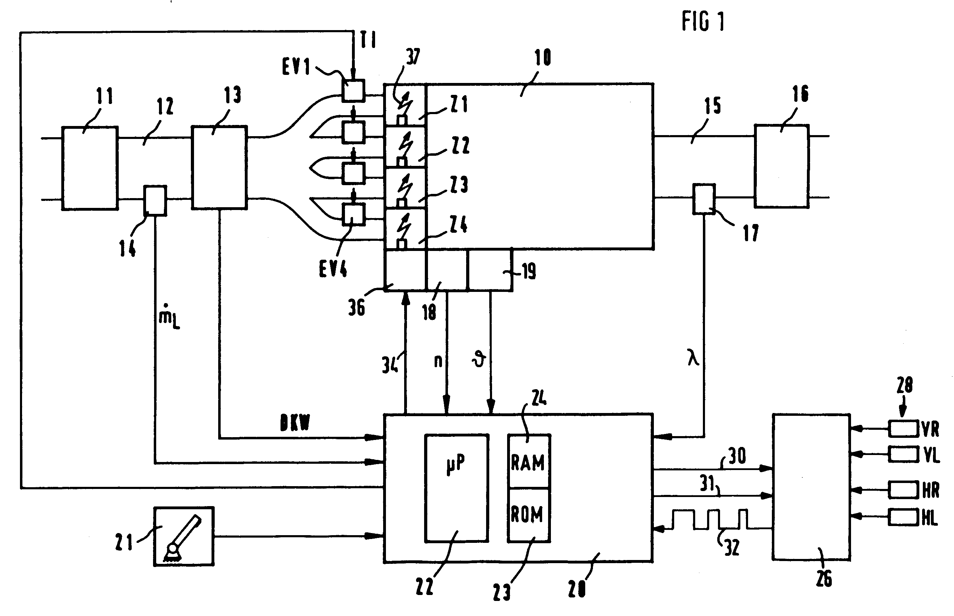

Bei einer aus Figur 1 ersichtlichen Antriebssteuerung für ein Kraftfahrzeug sind nur die zur Erläuterung der Erfindung erforderlichen Bestandteile als vereinfachtes Blockdiagramm dargestellt. Ein Motor 10 weist vier Zylinder Z1 bis Z4 auf. Jedem dieser ist ein Einspritzventil EV1 bis EV4 zugeordnet, das Kraftstoff in einer vorgegebenen Reihenfolge in das Ansaugrohr des jeweiligen Zylinders einspritzt (sequentielle Kraftstoffeinspritzung). Die weiteren Bestandteile der Kraftstoffversorgung - ein Kraftstofftank, eine Kraftstoffpumpe, ein Druckregler, ein Filter und zugehörige Leitungen - sind allgemein bekannt und deshalb hier nicht dargestellt.

Über ein Luftfilter 11, einen Ansaugkanal 12 und einen Drosselklappenblock 13 erhält der Motor 10 die erforderliche Verbrennungsluft. Der Drosselklappenblock 13 enthält in bekannter Weise eine Drosselklappe, einen Drosselklappenschalter und/oder einen Drosselklappen-Öffnungswinkelsensor. Ein in dem Ansaugkanal 12 angeordneter Luftmassenmesser 14 dient zum Ermitteln des von dem Motor 10 angesaugten Luftmassenstroms; er kann zum Beispiel als Heißfilm- oder Hitzdraht-Luftmassenmesser realisiert sein.

In einem Abgaskanal 15 ist ein Dreiwegekatalysator 16 vorgesehen, der zum Beseitigen der in den Auspuffgasen enthaltenen schädlichen Bestandteile HC, CO und $NO_x$ dient. Stromaufwärts von dem Dreiwegekatalysator 16 ist eine Lambda-Sonde 17 in dem Abgaskanal angeordnet. Ein Drehzahlsensor 18 dient zum Erfassen der Motordrehzahl n und ein Sensor 19 zum Erfassen der Kühlmitteltemperatur $\vartheta$. Die von den Sonden oder Sensoren 14 bis 19 ausgegebenen Signale $\dot{m}_L$, $\lambda$, n und $\vartheta$ werden an eine elektronische Motorsteuerung 20 übertragen und von dieser ausgewertet.

Die Motorsteuerung 20 erzeugt Steuersignale, mit denen die einzelnen Stellglieder des Motors gesteuert werden. Mit einem Einspritzsteuersignal TI werden die von den einzelnen Einspritzventilen EV1 bis EV4 für die einzelnen Zylinder Z1 bis Z4 abgegebenen Einspritzimpulse gesteuert.

Die Motorsteuerung enthält einen Mikroprozessor ($\mu$P) 22, einen Festwertspeicher (ROM) 23, eine Schreiblesespeicher (RAM) 24 und andere bekannte, hier nicht weiter dargestellte Bestandteile. Nach einem von dem Mikrocomputer 22 abgearbeiteten Programm steuert die Motorsteuerung 20 sämtliche Funktionen des Motors 10. Aufgrund der von den Sensoren 14 und 18 gelieferten Signale werden die Einspritzzeiten des Motors und deren Korrekturen z.B. so ermittelt, wie es in unserer älteren Anmeldung EP 93103599.2 (unser Zeichen GR 93 P 1103 E) beschrieben ist.

Von der Motorsteuerung 20 werden außerdem über eine Leitung 34 Steuersignale an eine Zündsteuerung 36 übertragen, die daraufhin Zündfunken 37 in den einzelnen Zylindern Z1 bis Z4 erzeugt.

Eine Antischlupfsteuerung 26 empfängt und verarbeitet die Signale von Raddrehzahlsensoren 28, von denen je einer dem vorderen rechten Rad VR, dem vorderen linken Rad VL, dem hinteren rechten Rad HR und dem hinteren linken Rad HL zugeordnet ist. Über eine Leitung 30 empfängt die Antischlupfsteuerung 26 von der Motorsteuerung 20 ein Lastsignal und über eine Leitung 31 ein Motordrehzahlsignal. Die Antischlupfsteuerung 26 verarbeitet diese beiden Signale und die Raddrehzahlsignale und erzeugt ein Eingriffssignal, das noch zu erläutern sein wird und das über eine Leitung 32 als pulsweitenmoduliertes Signal an die Motorsteuerung 20 übermittelt wird. Die Leitung 23 kann allerdings auch als Datenbus, z.B. als CAN-Bus, realisiert sein. Die Antischlupfsteuerung 23 ist in der Regel mit einem Antiblokkiersystem ABS kombiniert, das die Signale der gleichen Raddrehzahlsensoren 28 auswertet und ein Blockieren der Räder beim Bremsen verhindert. Das ABS ist bekannt und wird hier nicht weiter erläutert.

Erkennt die Antischlupfsteuerung 26 anhand der Raddrehzahlsignale, daß sich ein oder mehrere angetriebene Räder des Kraftfahrzeugs durchdrehen, sendet er ein Eingriffssignal an die Motorsteuerung 20, das eine Verringerung des Motordrehmoments bewirkt. Um das Motordrehmoment oder Motormoment zu reduzieren, wird bei mehrzylindrigen Motoren (i.a. mit vier oder mehr Zylindern) die Kraftstoffzufuhr zu einem oder mehreren Zylindern nach einem sogenannten Ausblendmuster abgeschaltet (vgl. die genannte ältere Anmeldung). Bei einem Vierzylindermotor sind acht solcher Ausblendmuster realisierbar.

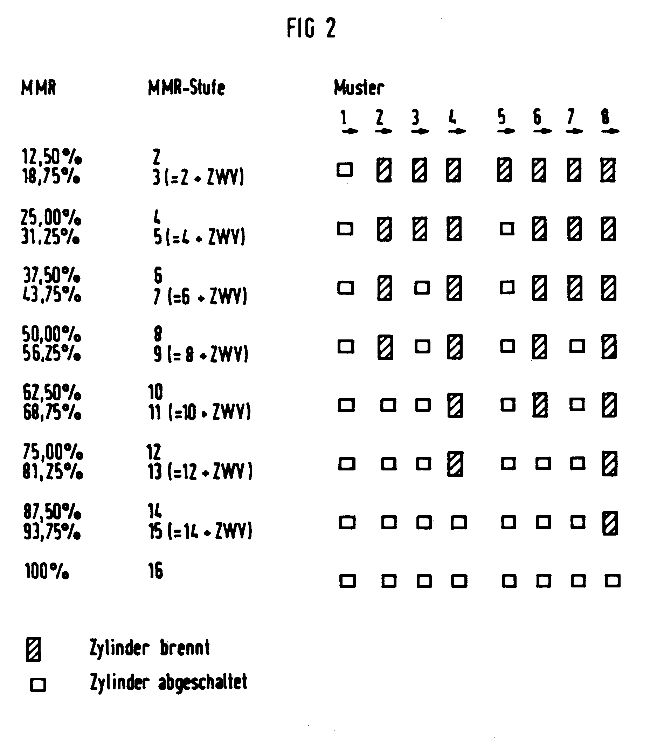

Wird ein Zylinder "alternierend", d.h. bei jedem zweiten Motorzyklus, ausgeblendet, so ergeben sich zusätzlich zu den vier Stufen durch vollständige Abschaltung eines Zylinders weitere vier Zwischenstufen der Motormomentreduzierung. Dies wird als Ausblenden oder Abschalten eines "halben" Zylinders bezeichnet. Die hier für einen Vierzylindermotor angewendeten Ausblendmuster sind zusammen mit den zugehörigen Motormomentreduzierungen MMR und den Nummern der MMR-Stufen in Figur 2 dargestellt. In der MMR-Stufe 0 erfolgt kein Motoreingriff und in der MMR-Stufe 1 nur eine Zündwinkel-verstellung, daher sind diese zwei Stufen in der Tabelle nicht dargestellt.

Eine über die Zylinderausblendung erreichte Motormomentreduzierung MMR wird auf das "innere Drehmoment" des Motors bezogen, d.h. auf die theoretische Drehmomenterzeugung des Motors ohne Berücksichtigung des Reibmoments. Damit ergibt sich ein linearer Zusammenhang: die Abschaltung eines Zylinders ergibt eine MMR von 25%, die Abschaltung zweier Zylinder eine MMR von 50% usw. Die Zwischenstufen, bei denen jeweils zusätzlich ein "halber" Zylinder abgeschaltet wird, ergeben eine MMR von 12,5 %. Durch die beschriebenen acht Ausblendmuster ist somit bei einem Vierzylindermotor eine Motormomentreduzierung von 0 bis 100% in Schritten oder Stufen von 12,5% realisierbar.

Durch die vorliegende Antriebssteuerung wird die Motormomentreduzierung verfeinert, indem Zwischenschritte von 6,25% durch eine zusätzliche Zündwinkelverstellung ZWV realisiert werden.

Es werden dazu sechzehn Motormomentreduzierstufen festgelegt, von denen zunächst nur acht durch Zylinderausblendungen realisiert werden:

## Tabelle 1:

| Reduzierstufe | MMR in % | Eingriff/Ausblendung |
|---|---|---|
| 0 | 0 | kein Eingriff |
| 1 | / | / |
| 2 | 12,5 | 1/2 Zylinder ausgebl. |
| 3 | / | / |
| 4 | 25 | 1 Zylinder ausgebl. |
| 5 | / | / |
| 6 | 37,5 | 1 1/2 Zylinder ausgebl. |
| ⋮ | | |
| 14 | 87,5 | 3 1/2 Zyl. ausgebl. |
| 15 | / | / |
| 16 | 100 | 4 Zylinder ausgeblendet |

Da alle vier Zylinder gleichmäßig sowohl an der Erzeugung als auch an der Verringerung von Motordrehmoment beteiligt sind, ergeben sich für die gewünschte Motormomentreduzierung über eine Zündwinkelverstellung folgende Zusammenhänge:

Tabelle 2

| Reduzierstufe Nr. | MMR über ZWV für die noch brennenden Zylinder | MMR* über ZWV, um-gerechnet auf vier brennende Zylinder |
|---|---|---|
| 1 | 6,25% | $\frac{4}{4} \cdot 6{,}25\% = 6{,}25\%$ |
| 3 | 6,25% | $\frac{4}{3{,}5} \cdot 6{,}25\% = 7{,}2\%$ |
| 5 | 6,25% | $\frac{4}{3} \cdot 6{,}25\% = 8{,}4\%$ |
| 7 | 6,25% | $\frac{4}{2{,}5} \cdot 6{,}25\% = 10{,}6\%$ |
| 9 | 6,25% | $\frac{4}{2} \cdot 6{,}25\% = 12{,}5\%$ |
| 11 | 6,25% | $\frac{4}{1{,}5} \cdot 6{,}25\% = 16{,}8\%$ |
| 13 | 6,25% | $\frac{4}{1} \cdot 6{,}25\% = 25{,}2\%$ |
| 15 | 6,25% | $\frac{4}{0{,}5} 6{,}25\% = 50{,}0\%$ |

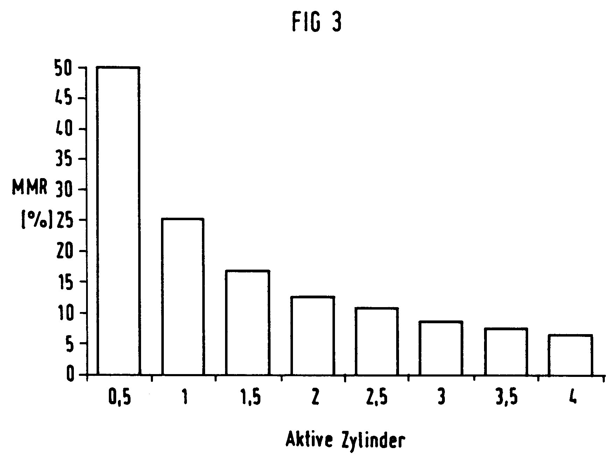

Hieraus wird ersichtlich, daß mit zunehmender Anzahl abgeschalteter Zylinder der Zündwinkeleingriff, der erforderlich ist, um einen MMR-Sprung von 6,25% zu erreichen, immer stärker werden muß. Dies ist aus dem Diagramm von Figur 3 ersichtlich, in dem die auf vier brennende oder aktive Zylinder umgerechnete Motormomentreduzierung MMR* über der Anzahl aktiver Zylinder aufgetragen ist.

Weiterin ist bekannt, daß zum Erreichen einer Motormomentreduzierung über eine Rücknahme des Zündwinkels der Betriebspunkt des Motors - d.h. die jeweilige Drehzahl und Last - von starkem Einfluß ist. Darüber hinaus ist aus der Tabelle 2 ersichtlich, daß bei den Stufen 1, 3 und 5 einerseits sowie 7 und 9 andererseits die jeweils erforderlichen Verringerungen oder Reduzierungen des Motormoments über eine Zündwinkelverstellung relativ nahe beieinander liegen.

Schließlich hat sich aus der praktischen Erprobung ergeben, daß Reduzierstufen ab der Nummer 13 für den Fahrbetrieb keine Rolle mehr spielen, da bei Ihnen das Drehmoment an der Kurbelwelle bereits kleiner als Null wird.

Hieraus folgt:

1. Unter der Voraussetzung eines konstanten Betriebspunktes können die Reduzierstufen 1, 3 und 5, über eine einheitliche Zündwinkelverstellung erreicht werden. Wird der Zündwinkel so abgestimmt, daß das gewünschte Motordrehmoment (Zielmoment) bei Stufe 3 ohne Fehler erreicht wird (7,2% MMR bezogen auf vier aktive oder brennende Zylinder), so beträgt der Fehler bei Stufe 1 +0,95% und bei Stufe 5 -1,15%.

2. Unter der Voraussetzung eines konstanten Betriebspunktes können die Reduzierstufen 7 und 9 ebenfalls über eine einheitliche Zündwinkelverstellung erreicht werden. Wird der Zündwinkel z.B. so abgestimmt, daß das Zielmoment in der Mitte zwischen Stufe 7 und Stufe 9 liegt (11,55% bezogen auf vier brennende Zylinder), so beträgt der Fehler bei Stufe 7 +0,95% und bei Stufe 9 -0,95%.

3. Die Stufen 11 und 13 liegen in ihrer Motormomentreduzierung bezogen auf vier brennde Zylinder soweit auseinander, daß sie nur mit getrennten Zündwinkelverstellungen erreicht werden können.

4. Die Stufe 15 liegt

a) außerhalb des über eine Zündwinkelverstellung erreichbaren Bereichs (aus physikalischen Gründen) und

b) außerhalb des nutzbaren Bereichs (das Abgabedrehmoment des Motors ist <0).

Daher wird die Stufe 15 nicht realisiert.

Anstelle von Werten der Motormomentreduzierung MMR können auch Werte eines reduzierten Motordrehmomentes über die Leitung 32 übertragen werden. Zahlenmäßig sind es dann jeweils 100% minus der MMR-Wert.

Es ist bei Motorsteuerungen üblich, den Zündwinkel im wesentlichen aus Kennfeldern zu entnehmen, in denen der Zündwinkel als Funktion der Motordrehzahl und der Last (z.B. in Form des Luftmassendurchsatzes oder des Saugrohrdrucks) abgespeichert ist. Solche Kennfelder sind in dem Festwertspeicher 23 der Motorsteuerung 20 abgelegt (Figur 1). Um die vorstehend beschriebenen Zündwinkelrücknahmen an die jeweiligen Betriebspunkte anzupassen, gibt es zwei Wege:

a) Aufstellen von vier zusätzlichen Kennfeldern, in denen die vorstehend beschriebenen Motormomentreduzierungen jeweils in Abhängigkeit von der Drehzahl und der Last abgelegt sind.

b) Aufstellen von vier zusätzlichen Kennfeldern, in denen Differenzzündwinkel, mit denen die vorstehend erläuterten Motormomentreduzierungen erreicht werden (sogenannte Offsetzündwinkel) jeweils in Abhängigkeit von der Drehzahl und der Last abgelegt sind.

Das jeweils von der Motorsteuerung 20 auszuwählende Kennfeld wird in einer Zuordnungstabelle zugewiesen, die nachstehend als Tabelle 3 dargestellt ist. Die vier zusätzlichen Kennfelder erhalten die Bezeichnungen KF_1 bis KF_4. Mit KF_0 wird der Basiszündwinkel bezeichnet.

Tabelle 3

| Reduzierstufe | 0 | 1 | 2 | 3 | 4 | 5 | 6 | 7 | 8 |
|---|---|---|---|---|---|---|---|---|---|
| ZWV-Kennfeld | KF_0 | KF_1 | KF_0 | KF_1 | KF_0 | KF_1 | KF_0 | KF_2 | KF_0 |
| Reduzierstufe | 9 | 10 | 11 | 12 | 13 | 14 | 15 | 16 | |
| ZWV-Kennfeld | KF_2 | KF_0 | KF_3 | KF_0 | KF_4 | KF_0 | KF_0 | KF_0 | |

Anhand dieser Zuordnungstabelle wird von der Motorsteuerung 20 jeweils dasjenige Kennfeld ausgewählt, das zusammen mit der zugehörigen Zylinderausblendung die Motormomentreduzierung ergibt, die von der Antischlupfregelung mit dem Eingriffssignal über die Leitung 32 angefordert wird.

Damit wird eine feinstufige Anpassung des Motordrehmoments an das jeweils von den Antriebsrädern maximal auf die Fahrbahn übertragbare Motordrehmoment mit sehr geringem Zusatzaufwand erreicht.

In Figur 2 sind die hier für einen Vierzylindermotor angewendeten Ausblendmuster (rechte Spalte) - neben den Motormomentreduzierungen MMR in Prozent und den Nummern der zugehörigen MMR-Stufen - dargestellt. In der MMR-Stufe 0 erfolgt kein Motoreingriff und in der MMR-Stufe 1 nur eine Zündwinkelverstellung, beide sind deshalb nicht dargestellt.

**Patentansprüche**

1. Antriebssteuerung für ein Kraftfahrzeug, die eine Motorsteuerung (20) und eine Antischlupfsteuerung (26) enthält und durch die beim Auftreten eines unzulässig großen Schlupfes zwischen mindestens einem angetriebenen Rad (VR, VL, HR, HL) und der Fahrbahn das Motordrehmoment durch Abschalten einzelner Zylinder (Z1, ...Z4) und/oder Verstellen des Zündzeitpunkts verringert wird,

   - indem von der Antischlupfsteuerung (26) an die Motorsteuerung (20) ein Eingriffssignal übermittelt wird, durch das ein Wert für die Drehmomentreduzierung vorgegeben wird;
   - indem von der Motorsteuerung (20) Motormomentreduzierungsstufen mit einer abwechselnden Abfolge

     -- von Zylinderabschaltungen mit einer Anzahl von Ausblendmustern, die an die Zylinderzahl des Kraftfahrzeugmotors angepaßt sind, und
     -- von Zündwinkelverstellungen mit einer Anzahl von Zusatzkennfeldern (KF_1, ... KF_4), die geringer ist als die Anzahl von Ausblendmustern,

     ausgeführt werden, und
   - indem von der Motorsteuerung (20) die dem Wert des Eingriffssignals entsprechende Motormomentreduzierungsstufe ausgewählt wird.

2. Antriebssteuerung nach Anspruch 1, dadurch gekennzeichnet, daß für einen Vierzylindermotor sechzehn Motormomentreduzierungsstufen vorgegeben sind, und daß davon acht Motormomentreduzierungsstufen durch Zylinderabschalten (ZA-Reduzierungsstufen) und die zwischen diesen acht Motormomentreduzierungsstufen liegenden sieben Motormomentreduzierungsstufen durch Zündwinkelverstellungen (ZWV-Reduzierstufen) mit vier zusätzlichen Zusatzkennfeldern (KF_1, ... KF_4) realisiert werden.

3. Antriebssteuerung nach Anspruch 2, dadurch gekennzeichnet, daß die ersten Motormomentreduzierungsstufen (ZA-Reduzierstufen) eine Drehmomentreduzierung um jeweils 12,5% und die zweiten Motormomentreduzierungsstufen (ZWV-Reduzierungsstufen) eine Drehmomentreduzierung um jeweils 6,25%, bezogen auf vier mit Kraftstoff versorgte Zylinder, bewirken.

4. Antriebssteuerung nach Anspruch 3, dadurch gekennzeichnet, daß die prozentualen Motormomentreduzierungen (MMR) auf das innere Drehmoment des Motors (10) bezogen sind.

5. Antriebssteuerung nach Anspruch 1, dadurch gekennzeichnet, daß eine erste, eine dritte sowie eine fünfte Motormomentreduzierungsstufen mit einem ersten Zusatzkennfeld (KE_1), eine siebte sowie eine neunte Motormomentreduzierungsstufen mit einem zweiten Zusatzkennfeld (KE_2), eine elfte Motormomentreduzierungsstufen mit einem dritten Zusatzkennfeld (KE_3) und eine dreizehnte Motormomentreduzierungsstufen mit einem vierten Zusatzkennfeld (KE_4) gesteuert werden.

## Claims

1. Drive controller for a motor vehicle, which contains an engine controller (20) and an anti-slip controller (26) and by means of which, when an unacceptably large slip occurs between at least one driven wheel (VR, VL, HR, HL) and the underlying surface, the engine torque is reduced by shutting off individual cylinders (Z1, ...Z4) and/or adjusting the ignition time,

   - in that an intervention signal is transmitted from the anti-slip controller (26) to the engine controller (20), by means of which intervention signal a value for the torque reduction is prescribed;
   - in that engine torque reduction stages are carried out by the engine controller (20) with an alternating sequence

      -- of cylinder shut-offs with a number of shut-off patterns which is adapted to the number of cylinders of the engine of the motor vehicle, and
      -- of ignition-angle adjustments with a number of additional characteristic diagrams (KF_1, ... KF_4) which is less than the number of shut-off patterns, and

   - in that the engine torque reduction stage which corresponds to the value of the intervention signal is selected by the engine controller (20).

2. Drive controller according to Claim 1, characterized in that sixteen engine torque reduction stages are prescribed for one four-cylinder engine, and in that eight of these engine torque reduction stages are realised by shutting off cylinders (ZA-reduction stages) and the seven engine torque reduction stages lying between these eight engine torque reduction stages are realised by ignition-angle adjustments (ZWV reduction stages) with four additional characteristic diagrams (KF_1, ...KF_4).

3. Drive controller according to Claim 2, characterized in that the first engine torque reduction stages (ZA-reduction stages) bring about a torque reduction by in each case 12.5%, and the second engine torque reduction stages (ZWV-reduction stages) bring about a torque reduction by in each case 6.25%, with respect to four cylinders supplied with fuel.

4. Drive controller according to Claim 3, characterized in that the engine torque reductions (MMR) in terms of percentages are related to the internal torque of the engine (10).

5. Drive controller according to Claim 1, characterized in that a first, a third and a fifth engine torque reduction stage are controlled with a first additional characteristic diagram (KE_1), a seventh and a ninth engine torque reduction stage are controlled with a second additional characteristic diagram (KE_2), an eleventh engine torque reduction stage is controlled with a third additional characteristic diagram (KE_3) and a thirteenth engine torque reduction stage is controlled with a fourth additional characteristic diagram (KE_4).

## Revendications

1. Commande d'entraînement pour un véhicule automobile comprenant une commande de moteur (20) et une commande antipatinage (26) et qui permet, si un patinage d'ampleur inadmissible se produit entre au moins une roue motrice (VR, VL, HR, HL) et la chaussée, de réduire le couple moteur par l'arrêt de certains cylindres (Z1, ..., Z4)

6

et/ou le décalage de l'instant d'allumage,

- la commande antipatinage (26) transmettant à la commande de moteur (20) un signal d'intervention par lequel une valeur pour la réduction du couple moteur est définie;
- la commande de moteur (20) réalisant des niveaux de réduction du couple moteur dans un ordre alternant

-- d'arrêts de cylindres d'après un nombre de trames de désactivation adaptées au nombre de cylindres du moteur du véhicule, et
-- de décalages de l'angle d'allumage avec un nombre de champs de caractéristiques supplémentaires (KF_1, ..., KF_4) qui est inférieur au nombre des trames de désactivation, et

- la commande de moteur (20) sélectionne le niveau de réduction du couple moteur correspondant à la valeur du signal d'intervention.

2. Commande d'entraînement selon la revendication 1, caractérisée en ce que seize niveaux de réduction du couple moteur sont prédéfinis pour un moteur à quatre cylindres, et que huit de ces niveaux de réduction du couple moteur sont réalisés par l'arrêt de cylindres (niveaux AC (ZA)) et que les sept niveaux de réduction du couple moteur situés entre ces huit niveaux de réduction du couple moteur sont réalisés par des décalages de l'angle d'allumage (niveaux de réduction DAA) avec quatre champs de caractéristiques supplémentaires (KF_1, ..., KF_4).

3. Commande d'entraînement selon la revendication 2, caractérisée en ce que les premiers niveaux de réduction du couple moteur (niveaux AC) provoquent une réduction du couple moteur de 12,5% chacun et que les deuxièmes niveaux de réduction du couple moteur (niveaux de réduction DAA) provoquent une réduction du couple moteur de 6,25% chacun rapportée à quatre cylindres alimentés en carburant.

4. Commande d'entraînement selon la revendication 3, caractérisée en ce que les réductions du couple moteur (RCM) en pour-cent se rapportent au couple interne du moteur (10).

5. Commande d'entraînement selon la revendication 1, caractérisée en ce qu'un premier, un troisième ainsi qu'un cinquième niveau de réduction du couple moteur sont commandés par un premier champ de caractéristiques supplémentaire (KE_1), qu'un septième ainsi qu'un neuvième niveau de réduction du couple moteur sont commandés par un deuxième champ de caractéristiques supplémentaire (KE_2), qu'un onzième niveau de réduction du couple moteur est commandé par un troisième champ de caractéristiques supplémentaire (KE_3), et qu'un treizième niveau de réduction du couple moteur est commandé par un quatrième champ de caractéristiques supplémentaire (KE_4).

EP 0 668 183 B1

FIG 1

# FIG 2

| MMR | MMR-Stufe | Muster | | | | | | | |
|---|---|---|---|---|---|---|---|---|---|
| | | 1 | 2 | 3 | 4 | 5 | 6 | 7 | 8 |
| 12,50%<br>18,75% | 2<br>3 (=2 + ZWV) | □ | ▨ | ▨ | ▨ | ▨ | ▨ | ▨ | ▨ |
| 25,00%<br>31,25% | 4<br>5 (=4 + ZWV) | □ | ▨ | ▨ | ▨ | □ | ▨ | ▨ | ▨ |
| 37,50%<br>43,75% | 6<br>7 (=6 + ZWV) | □ | ▨ | □ | ▨ | □ | ▨ | ▨ | ▨ |
| 50,00%<br>56,25% | 8<br>9 (=8 + ZWV) | □ | ▨ | □ | ▨ | □ | ▨ | □ | ▨ |
| 62,50%<br>68,75% | 10<br>11 (=10 + ZWV) | □ | □ | □ | ▨ | □ | ▨ | □ | ▨ |
| 75,00%<br>81,25% | 12<br>13 (=12 + ZWV) | □ | □ | □ | ▨ | □ | □ | □ | ▨ |
| 87,50%<br>93,75% | 14<br>15 (=14 + ZWV) | □ | □ | □ | □ | □ | □ | □ | ▨ |
| 100% | 16 | □ | □ | □ | □ | □ | □ | □ | □ |

▨  Zylinder brennt

□  Zylinder abgeschaltet

## FIG 3